# EUROPÄISCHE PATENTANMELDUNG

(11) **EP 4 300 337 A1**
(43) Veröffentlichungstag der Anmeldung: **03.01.2024**
(21) Anmeldenummer: 22182205.9
(22) Anmeldetag: 30.06.2022
(51) Int. Cl.: G06F 21/60, G06F 21/62, G05B 19/04, H04L 9/32, G06F 9/455

(54) **VERFAHREN UND SYSTEM ZUR BEREITSTELLUNG VON STEUERUNGSANWENDUNGEN FÜR INDUSTRIELLE AUTOMATISIERUNGSGERÄTE**

(71) Anmelder: Siemens Aktiengesellschaft, 80333 München (DE)
(72) Erfinder: Albrecht, Harald, 90475 Nürnberg (DE); Feist, Christian Peter, 80689 München (DE); Knierim, Christian, 81373 München (DE)
(74) Vertreter: Siemens Patent Attorneys

(57) **Zusammenfassung**

Zur Bereitstellung von Steuerungsanwendungen, die jeweils mittels Ablaufsteuerungskomponenten (131-133) bereitgestellt werden, werden die Ablaufsteuerungskomponenten jeweils bei einem Start ihrer Ausführung anhand von Konfigurationsinformationen (212, 222, 232) bzw. referenzierten Speicherabbildern (211, 212, 231) hinsichtlich eines Zugriffs auf zumindest einen Socket (121-123) einer Ablaufsteuerungsumgebung (112) klassifiziert. Anhand einer Klassifizierung der Ablaufsteuerungskomponenten wird jeweils ein Berechtigungsprofil für einen Socket-Zugriff erstellt oder referenziert. Für jede Ablaufsteuerungskomponente wird jeweils ein individuelles, einem Berechtigungsprofil zugeordnetes Token (240) für den Socket-Zugriff erstellt und an die jeweilige Ablaufsteuerungskomponente übergeben. Mit den Tokens und/oder mit den Berechtigungsprofilen wird jeweils eine anwendungsspezifische Ressourcen-Zugriffsrichtlinie (230) verknüpft, die zur Anwendung an eine Steuerungskomponente übermittelt wird, die das jeweilige Socket öffnet.

## Beschreibung

Die vorliegende Erfindung betrifft ein Verfahren zur Bereitstellung von Steuerungsanwendungen für industrielle Automatisierungsgeräte und ein System zur Durchführung dieses Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

WO 2022/042905 A1 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

In der älteren europäischen Patentanmeldung mit dem Anmeldeaktenzeichen 21212849.0 ist ein Verfahren zur Bereitstellung von Steuerungsanwendungen beschrieben, bei dem die Steuerungsanwendungen jeweils mittels Ablaufsteuerungskomponenten bereitgestellt werden, die in eine mittels einer Server-Einrichtung gebildete Ablaufsteuerungsumgebung ladbar und dort ausführbar sind. Steuerungsanwendungen, die ausgewählte Sicherheitsberechtigungen erfordern, werden jeweils eine Kennzeichnung als sicherheitskritische Steuerungsanwendung zugeordnet. Für die Steuerungsanwendungen, denen eine Kennzeichnung als sicherheitskritische Steuerungsanwendung zugeordnet ist, wird jeweils zumindest eine Ablaufbedingung für die ausgewählten Sicherheitsberechtigungen festgelegt. Die Ablaufsteuerungsumgebung überwacht während einer Ausführung der Ablaufsteuerungskomponenten für die Steuerungsanwendungen jeweils ein Eintreten der jeweiligen Ablaufbedingung. Die Ausführung der Ablaufsteuerungskomponenten wird jeweils bei Eintreten der jeweiligen Ablaufbedingung beendet.

Aus der älteren europäischen Patentanmeldung mit dem Anmeldeaktenzeichen 22177736.0 ist ein Verfahren zur Bereitstellung von Steuerungsanwendungen mittels Ablaufsteuerungskomponenten für Steuerungsanwendungen bekannt, deren Ausführung ausgewählte Privilegien erfordert. Hierzu wird jeweils eine Spezifikation benötigter sicherheitskritischer Ressourcen erstellt. Anhand der Spezifikationen wird jeweils eine zusätzliche Ablaufsteuerungskomponente ermittelt, die für eine Bereitstellung eines Zugriffs auf die benötigten sicherheitskritischen Ressourcen vorgesehen ist. Dementsprechend wird eine Ausführung der jeweiligen Ablaufsteuerungskomponente gemeinsam mit der zusätzlichen Ablaufsteuerungskomponente gestartet. Durch eine Ablaufsteuerungsumgebung wird eine Schnittstelle zur Interprozesskommunikation zwischen der jeweiligen Ablaufsteuerungskomponente und der zusätzlichen Ablaufsteuerungskomponente eingerichtet. Der Zugriff auf die jeweils benötigten sicherheitskritischen Ressourcen wird mittels Interprozesskommunikation zwischen der jeweiligen Ablaufsteuerungskomponente und der zusätzlichen Ablaufsteuerungskomponente bereitgestellt.

Für Steuerungsanwendungen, die mittels Container-Virtualisierung verfügbar gemacht werden, kann insbesondere mittels Konfigurationsinformationen bzw. Deployment-Informationen, wie einer Docker Compose-Datei, definiert werden, auf welche Ressourcen eines Hosts die jeweilige Steuerungsanwendung Zugriff erhält. Diese Ressourcen können beispielsweise Gerätedateien oder persistente Speicherbereiche (Volumes) umfassen, die einer Anwendungsinstanz zugeordnet werden, um Daten persistieren zu können. Darüber hinaus kann auch Zugriff auf ein Socket einer Container-Laufzeitumgebung, z.B. Docker Socket, gewährt werden, so dass Steuerungsanwendungen mit entsprechend erteiltem Ressourcen-Zugriff Operationen über das Socket der Container-Laufzeitumgebung durchführen können. Üblicherweise wird ein Zugriff auf ein Socket einer Container-Laufzeitumgebung über eine Socket-Datei eingeräumt, die als Mount Point in eine Instanz einer mittels Container-Virtualisierung bereitgestellten Steuerungsanwendung eingehängt werden kann. Sobald eine Instanz einer Steuerungsanwendung Zugriff auf eine Socket-Datei einer Container-Laufzeitumgebung erhält, können zulässige Operationen über das Socket der Container-Laufzeitumgebung nicht mehr granular auf ausgewählte Operationen oder API-Aufrufe eingeschränkt werden. Lediglich Lese-Rechte bzw. Schreib-Rechte auf die Socket-Datei insgesamt können gesteuert werden.

Der vorliegenden Erfindung liegt daher die Aufgabe zugrunde, ein Verfahren zur Bereitstellung von Steuerungsanwendungen zu schaffen, die Zugriff auf ein Socket einer Ablaufsteuerungsumgebung anfordern, wobei das Verfahren eine selektive und effiziente Festlegung zulässiger bzw. unzulässiger Operationen über das Socket ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 13 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden Steuerungsanwendungen für industrielle Automatisierungsgeräte jeweils mittels Ablaufsteuerungskomponenten bereitgestellt, die in eine mittels eines Hosts gebildete Ablaufsteuerungsumgebung ladbar und dort ausführbar sind. Für die Ablaufsteuerungskomponenten sind jeweils Deployment-Informationen, wie eine Docker Compose-Datei, bzw. Konfigurationsinformationen vorgegeben, die zumindest eine Referenzierung eines Speicherabbilds (Image) für die jeweilige Ablaufsteuerungskomponente und anwendungsspezifische Vorgaben zur Nutzung von Ressourcen des Hosts umfassen. Die Konfigurationsinformationen werden vorzugsweise jeweils für ein Laden bzw. eine Ausführung der jeweiligen Ablaufsteuerungskomponente verwendet.

Insbesondere können die Ablaufsteuerungskomponenten Software-Container sein bzw. umfassen, die jeweils von anderen Software-Containern oder Container-Gruppen, z.B. Pods, isoliert innerhalb der Ablaufsteuerungsumgebung auf einem Host-Betriebssystem einer Server-Einrichtung ablaufen. Grundsätzlich können für die Ablaufsteuerungskomponenten auch alternative Micro-Virtualisierungskonzepte, wie Snaps, verwendet werden. Vorzugsweise nutzen die Software-Container jeweils gemeinsam mit anderen auf der jeweiligen Server-Einrichtung ablaufenden Software-Containern einen gemeinsamen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Die Ablaufsteuerungsumgebung kann insbesondere eine Container-Laufzeitumgebung bzw. Container-Engine sein, durch die ein Anlegen, Löschen bzw. Verknüpfen von virtuellen Ressourcen erfolgt. Dabei umfassen die virtuellen Ressourcen Software-Container, virtuelle Kommunikationsnetze und diesen zugeordnete Verbindungen. Beispielsweise kann die Ablaufsteuerungsumgebung eine Docker Engine oder einen Snap Core umfassen, die bzw. der auf einer Server-Einrichtung abläuft. Grundsätzlich können auch andere (orchestrierte) Container-Laufzeitumgebungen, wie podman oder Kubernetes, verwendet werden.

Erfindungsgemäß werden die Ablaufsteuerungskomponenten jeweils bei einem Start ihrer Ausführung, insbesondere vor dem Start ihrer Ausführung, anhand der Konfigurationsinformationen bzw. des referenzierten Speicherabbilds hinsichtlich eines Zugriffs auf zumindest einen Socket der Ablaufsteuerungsumgebung klassifiziert. Anhand einer Klassifizierung der Ablaufsteuerungskomponenten wird jeweils ein Berechtigungsprofil für einen Socket-Zugriff erstellt oder referenziert. Dabei sind durch die Berechtigungsprofile jeweils auf das Socket bezogene zulässige bzw. unzulässige Operationen festgelegt. Sockets können insbesondere Datei- oder Netzwerk-Sockets sein bzw. jeweils eine Anwendungsprogrammierschnittstelle bereitstellen.

Für jede Ablaufsteuerungskomponente wird erfindungsgemäß jeweils ein individuelles, einem Berechtigungsprofil zugeordnetes Token für den Socket-Zugriff erstellt und an die jeweilige Ablaufsteuerungskomponente übergeben. Mit den Tokens bzw. mit den Berechtigungsprofilen wird jeweils eine anwendungsspezifische Ressourcen-Zugriffsrichtlinie verknüpft, die zur Anwendung an eine Steuerungskomponente übermittelt wird, die das jeweilige Socket öffnet. Vorzugsweise erfolgt der Socket-Zugriff jeweils anhand des jeweiligen Tokens und entsprechend der jeweiligen Ressourcen-Zugriffsrichtlinie. Zur Vermeidung von Konflikten zwischen Klassifizierungsrichtlinien bzw. Ressourcen-Zugriffsrichtlinien kann beispielsweise ein First-Hit- oder Best-Match-Verfahren zur Erstellung oder Verknüpfung einer anwendungsspezifischen Ressourcen-Zugriffsrichtlinie angewendet werden. Grundsätzlich könnte auch eine Vereinigungsmenge von eingeräumten Berechtigungen gebildet werden, die aus den Klassifizierungsrichtlinien bzw. Ressourcen-Zugriffsrichtlinien resultieren. Dabei könnte beispielsweise ein entsprechend einer ersten Richtlinie vorgesehenes Verbot einer Operation durch eine entsprechend einer zweiten Richtlinie vorgesehene Erlaubnis der Operation aufgehoben werden.

Insgesamt ermöglicht die vorliegende Erfindung, dass ein Zugriff auf über Sockets exponierte Anwendungsprogrammierschnittstellen (API) selektiv und dynamisch durch eine Zuweisung von instanzspezifischen Tokens geschützt wird. Hierdurch können gezielt einzelne Operationen auf einen über ein Socket bereitgestellten Befehlssatz verboten oder erlaubt werden. Darüber hinaus ist eine Anwendung der vorliegenden Erfindung nicht auf lokale Hosts beschränkt, sondern auch in verteilten Systemen möglich, insbesondere in orchestrierten verteilten Systemen. Somit ist eine Anwendung der vorliegenden Erfindung insbesondere für Umgebungen geeignet, in denen Skalierbarkeit wichtig ist.

Die Klassifizierung der Ablaufsteuerungskomponenten erfolgt vorzugsweise auf Grundlage einer Klassifizierungsrichtlinie. Bei einer Erzeugung oder Aktualisierung von Tokens werden dabei jeweils anhand des jeweiligen Tokens, anhand der Klassifizierungsrichtlinie und anhand in der Klassifizierungsrichtlinie referenzierter Berechtigungsprofile bzw. Berechtigungen für den Socket-Zugriff Regeln erzeugt oder angepasst, die in der jeweiligen Ressourcen-Zugriffsrichtlinie hinterlegt werden. Allgemein können durch die Klassifizierungsrichtlinie zu schützende Sockets, auf Sockets zu erteilende Berechtigungen, Speicherorte der Ressourcen-Zugriffsrichtlinien, entsprechend den Konfigurationsinformationen vorgesehene Eigenschaften der jeweiligen Ablaufsteuerungskomponente bzw. Übergabeverfahren für die Tokens festgelegt sein. Dies ermöglicht eine genaue und effiziente Klassifizierung der Ablaufsteuerungskomponenten.

Die Sockets werden vorzugsweise jeweils durch die Ablaufsteuerungsumgebung geöffnet. In diesem Fall werden die anwendungsspezifischen Ressourcen-Zugriffsrichtlinien jeweils zur Anwendung an die Ablaufsteuerungsumgebung übermittelt. Darüber hinaus werden die Ressourcen-Zugriffsrichtlinien vorteilhafterweise jeweils durch die Ablaufsteuerungsumgebung, durch eine Anwendung, die das jeweilige Socket bereitstellt, oder durch eine der Ablaufsteuerungsumgebung oder der Anwendung zugeordnete Funktionskomponente durchgesetzt. Somit ist eine zuverlässige und effektive Durchsetzung der anwendungsspezifischen Ressourcen-Zugriffsrichtlinien gewährleistet.

Die anwendungsspezifischen Ressourcen-Zugriffsrichtlinien erweitern vorteilhafterweise jeweils eine Standard-Richtlinie zur Öffnung des jeweiligen Socket. Somit können die Ressourcen-Zugriffsrichtlinien von einer gesicherten Grundlage abgeleitet werden. Die Ressourcen-Zugriffsrichtlinien stellen insbesondere anwendungsspezifische Sicherheitsrichtlinien dar. Eine Sicherheitsrichtlinie (Security Policy, auch Sicherheitspolitik) ist üblicherweise ein technisches bzw. organisatorisches Dokument, mit dem in Unternehmen oder Institutionen bestehende Sicherheitsansprüche umgesetzt und erreicht werden sollen. Kernbestandteile sind insbesondere eine Sicherstellung von Integrität, Vertraulichkeit, Verfügbarkeit bzw. Authentizität zu schützender Informationen. Eine Sicherheitsrichtlinie für eine Datagrammfilter-Komponente oder für eine Firewall legt beispielsweise fest, wie eine konkrete Konfiguration erfolgt, welche Zugriffsrechte erteilt werden, wie eine Protokollierung erfolgt oder welche Abwehrmaßnahmen die Datagrammfilter-Komponente oder Firewall in einem Angriffsszenario trifft. Eine Sicherheitsrichtlinie kann insbesondere als Konfigurationsdatei, als XML-Datei, als eine Gerätekonfiguration vorliegen, die unmittelbar maschinell auswertbar ist. Ebenso ist es möglich, dass eine Sicherheitsrichtlinie in textueller Form vorliegt, die mittels auf künstlicher Intelligenz oder maschinellem Lernen basierender Verfahren ausgewertet wird. Außerdem ist es möglich, dass eine Sicherheitsrichtlinie in graphischer Form vorliegt, die mittels Bildverarbeitungs- bzw. Mustererkennungsverfahren ausgewertet wird.

Entsprechend einer bevorzugten Ausführungsform der vorliegenden Erfindung erfasst ein Orchestrierungssystem ein Anlegen, ein Löschen bzw. eine Änderung der Ablaufsteuerungskomponenten und registriert die Steuerungsanwendungen mit ihrem jeweiligen Ausführungsstatus. Insbesondere umfasst das Anlegen, das Löschen bzw. die Änderung der Ablaufsteuerungskomponenten jeweils ein Allokieren oder Freigeben von Ressourcen des Hosts. Vorteilhafterweise werden die Tokens durch eine Zuteilungskomponente erzeugt oder aktualisiert werden, die dem Orchestrierungssystem zugeordnet ist. Dies ermöglicht eine besonders effiziente und zuverlässige Verwaltung der Tokens. Zur Erfüllung hoher Sicherheitsanforderungen werden Klassifizierungsrichtlinien, Berechtigungsprofile, Tokens bzw. Ressourcen-Zugriffsrichtlinien vorzugsweise kryptographisch gesichert durch das Orchestrierungssystem bzw. die Zuteilungskomponente verwaltet.

Das erfindungsgemäße System ist zur Durchführung eines Verfahrens entsprechend vorangehenden Ausführungen vorgesehen und umfasst eine mittels eines Hosts gebildete Ablaufsteuerungsumgebung sowie zumindest eine Ablaufsteuerungskomponente zur Bereitstellung einer Steuerungsanwendung. Dabei ist die Ablaufsteuerungskomponente in die Ablaufsteuerungsumgebung ladbar und dort ausführbar. Für die Ablaufsteuerungskomponenten sind jeweils Konfigurationsinformationen vorgegeben, die zumindest eine Referenzierung eines Speicherabbilds für die jeweilige Ablaufsteuerungskomponente und anwendungsspezifische Vorgaben zur Nutzung von Ressourcen des Hosts umfassen.

Darüber hinaus ist das erfindungsgemäße System dafür eingerichtet, dass die Ablaufsteuerungskomponenten jeweils bei einem Start ihrer Ausführung, insbesondere vor dem Start ihrer Ausführung, anhand der Konfigurationsinformationen bzw. des referenzierten Speicherabbilds hinsichtlich eines Zugriffs auf zumindest einen Socket der Ablaufsteuerungsumgebung klassifiziert werden. Außerdem ist das System dafür eingerichtet ist, dass anhand einer Klassifizierung der Ablaufsteuerungskomponenten jeweils ein Berechtigungsprofil für einen Socket-Zugriff erstellt oder referenziert wird, Dabei sind durch die Berechtigungsprofile jeweils auf das Socket bezogene zulässige bzw. unzulässige Operationen festgelegt.

Ferner ist das erfindungsgemäße System dafür eingerichtet, dass für jede Ablaufsteuerungskomponente jeweils ein individuelles, einem Berechtigungsprofil zugeordnetes Token für den Socket-Zugriff erstellt und an die jeweilige Ablaufsteuerungskomponente übergeben wird. Zusätzlich ist das System ferner dafür eingerichtet, dass mit den Tokens bzw. mit den Berechtigungsprofilen jeweils eine anwendungsspezifische Ressourcen-Zugriffsrichtlinie verknüpft wird, die zur Anwendung an eine Steuerungskomponente übermittelt wird, die das jeweilige Socket öffnet.

Die vorliegende Erfindung wird nachfolgend an einem Ausführungsbeispiel anhand der Zeichnung näher erläutert. Es zeigt
- Figur 1: ein System zur Bereitstellung von Steuerungsanwendungen, die Zugriff auf ein Socket einer Ablaufsteuerungsumgebung anfordern,
- Figur 2: eine Darstellung eines Verfahrensablaufs zur Bereitstellung von Steuerungsanwendungen mittels des in Figur 1 dargestellten Systems.

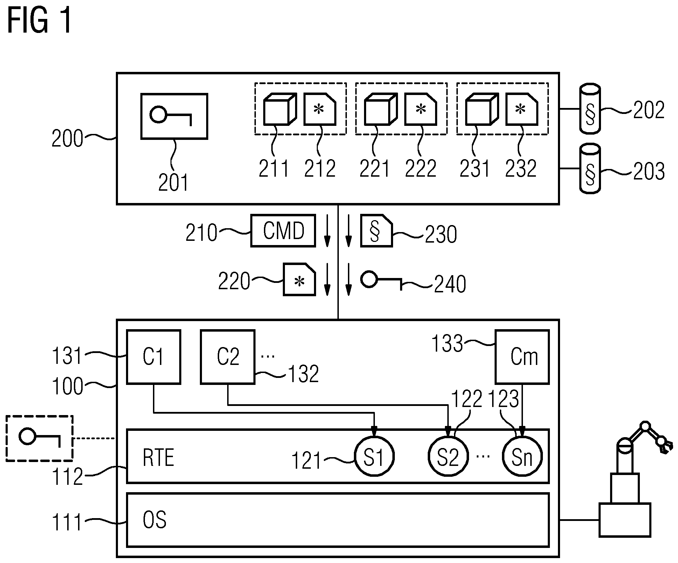

Das in Figur 1 dargestellte System umfasst einen Host 100 zur Bereitstellung von Steuerungsanwendungen eines industriellen Automatisierungssystems mittels Ablaufsteuerungskomponenten 131, die im vorliegenden Ausführungsbeispiel durch Software-Container implementiert sind. Die Steuerungsanwendungen des industriellen Automatisierungssystems sind exemplarisch für zeitkritische Dienste und können auch Überwachungsfunktionen umfassen.

Der Host 100 kann mittels der Steuerungsanwendungen beispielsweise Funktionen von Steuerungsgeräten eines industriellen Automatisierungssystems, wie speicherprogrammierbaren Steuerungen, oder von Feldgeräten, wie Sensoren oder Aktoren, implementieren. Auf diese Weise kann der Host 100 insbesondere für einen Austausch von Steuerungs- und Messgrößen mit durch den Host 100 gesteuerten Maschinen oder Vorrichtungen genutzt werden. Dabei kann der Host 100 aus erfassten Messgrößen geeignete Steuerungsgrößen für die Maschinen oder Vorrichtungen ermitteln.

Alternativ oder zusätzlich kann der Host 100 mittels der Steuerungsanwendungen Funktionen einer Bedien- und Beobachtungsstation implementieren und somit zur Visualisierung von Prozessdaten bzw. Mess- und Steuerungsgrößen genutzt werden, die durch Automatisierungsgeräte verarbeitet bzw. erfasst werden. Insbesondere kann der Host 100 zur Anzeige von Werten eines Regelungskreises und zur Veränderung von Regelungsparametern oder -programmen verwendet werden.

Außerdem umfasst das in Figur 1 dargestellte System ein Orchestrierungssystem 200, das ein Anlegen, ein Löschen bzw. eine Änderung der Ablaufsteuerungskomponenten erfasst und die Steuerungsanwendungen mit ihrem jeweiligen Ausführungsstatus registriert. Hierzu stellt das Orchestrierungssystem 200 für Steuerungsanwendungen jeweils zumindest ein Speicherabbild (Image) 211, 221, 231 für einen Software-Container sowie zugehörige Konfigurationsinformationen 212, 222, 232 insbesondere an den Host 100 bereit. Grundsätzlich kann das Orchestrierungssystem 200 in den Host 100 integriert sein. Vorzugsweise ist ein Orchestrierungssystem 200 für mehrere Hosts vorgesehen, die mittels Software-Containern Steuerungsanwendungen bereitstellen.

Das Anlegen, das Löschen bzw. die Änderung der Ablaufsteuerungskomponenten umfasst jeweils ein Allokieren oder Freigeben von Ressourcen des Hosts 100. Dies wird mittels an den Host 100 übermittelter Steuerungsbefehle 210 und Konfigurationsinformationen 220 durch das Orchestrierungssystem 200 gesteuert. Die Konfigurationsinformationen 220 sind vorzugsweise Deployment-Informationen, beispielsweise docker-compose. yml-Konfigurationsdateien. Insbesondere umfassen die Konfigurationsinformationen 220 jeweils neben einer Angabe eines Speicherabbilds für den jeweiligen Software-Container und anwendungsspezifische Vorgaben. Die Konfigurationsinformationen 220 werden jeweils für ein Laden bzw. eine Ausführung des jeweiligen Software-Containers verwendet.

Anhand von Signaturen für die Speicherabbilder 211, 221, 231 und für die Konfigurationsinformationen 212, 222, 232 wird vorzugsweise eine Authentizität der Speicherabbilder 211, 221, 231 und Konfigurationsinformationen 212, 222, 232 überprüft, beispielsweise durch einen Betreiber des Orchestrierungssystems 200 oder automatisch durch das Orchestrierungssystem 200. Darüber hinaus kann überprüft werden, dass innerhalb der Speicherabbilder 211, 221, 231 bzw. Konfigurationsinformationen 212, 222, 232 abhängig von der jeweiligen Signatur nur definierte Parameter gesetzt sind. Dementsprechend werden nicht-konforme Speicherabbilder 211, 221, 231 bzw. Konfigurationsinformationen 212, 222, 232 nicht für eine Verwendung zugelassen.

Auf einem Betriebssystem 111 des Hosts 100 ist eine Ablaufsteuerungsumgebung 112 als Betriebssystem-Anwendung installiert. Die Software-Container bzw. Ablaufsteuerungskomponenten 131-133 können in diese Ablaufsteuerungsumgebung 112 geladen und dort ausgeführt werden. Grundsätzlich können Ablaufsteuerungskomponenten 131-133 jeweils vom Host 100 auf einen anderen Host zur dortigen Ausführung migriert bzw. auf anderen Hosts zeitgleich ausgeführt werden.

Im vorliegenden Ausführungsbeispiel laufen die Software-Container jeweils von anderen Software-Containern, Container-Gruppen bzw. Pods isoliert innerhalb der Ablaufsteuerungsumgebung 112 auf dem Betriebssystem 111 des Hosts 100 ab. Dabei nutzen die Software-Container jeweils gemeinsam mit anderen auf dem Host 100 ablaufenden Software-Containern einen bzw. denselben Kernel des Betriebssystems 111. Die Ablaufsteuerungsumgebung 112 ist vorzugsweise eine Container-Laufzeitumgebung bzw. Container-Engine.

Eine Isolation der Software-Container bzw. eine Isolation von ausgewählten Betriebssystemmitteln untereinander kann insbesondere mittels Control Groups und Namespaces realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden, indem Ressourcen des Kernels des Betriebssystems virtualisiert werden.

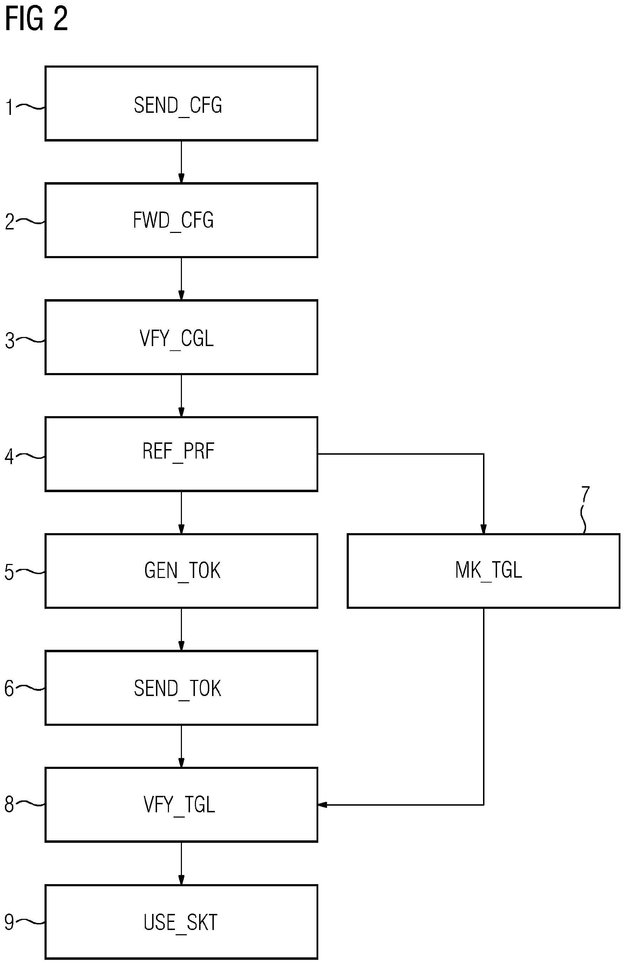

Zur Bereitstellung von Steuerungsanwendungen, die Zugriff auf ein Socket einer Ablaufsteuerungsumgebung anfordern, wird für diese Steuerungsanwendungen entsprechend Schritt 1 des in Figur 2 dargestellten Verfahrensablaufs zunächst Konfigurationsinformationen 212, 222, 232 für die jeweilige Ablaufsteuerungskomponente 131-133 an das Orchestrierungssystem 200 übergeben. Diese Konfigurationsinformationen 212, 222, 232 umfassen zumindest eine Referenzierung eines Speicherabbilds 211, 221, 231 für die jeweilige Ablaufsteuerungskomponente 131-133 und anwendungsspezifische Vorgaben zur Nutzung von Ressourcen des Hosts 100 und werden entsprechend Schritt 2 an eine Zuteilungskomponente 201 weitergeleitet.

Im vorliegenden Ausführungsbeispiel ist die Zuteilungskomponente 201 dem Orchestrierungssystem 200 zugeordnet. Grundsätzlich könnte die Zuteilungskomponente 201 auch in den Host 100 integriert sein und vom Orchestrierungssystem 200 für eine Steuerung des Zugriffs auf ein Socket 121-123 benötigte Konfigurations- und Klassifizierungsinformationen oder etwaige vordefinierte Berechtigungsprofile abrufen. Dabei kann die Zuteilungskomponente 201 beispielsweise als Plugin, Bibliothek oder externes Programm ausgestaltet sein und bei einem Starten bzw. Stoppen einer Instanz einer Ablaufsteuerungskomponente 131-133 aufgerufen werden, insbesondere gesteuert durch das Orchestrierungssystem 200.

Die Ablaufsteuerungskomponenten 131-133 werden durch die Zuteilungskomponente 201 jeweils vor einem Start ihrer Ausführung anhand der Konfigurationsinformationen 212, 222, 232 bzw. des referenzierten Speicherabbilds 211, 221, 231 hinsichtlich eines Zugriffs auf zumindest einen Socket 121-123 der Ablaufsteuerungsumgebung 112 klassifiziert (Schritt 3). Die Sockets 121-123 sind insbesondere Datei- oder Netzwerk-Sockets bzw. stellen jeweils eine Anwendungsprogrammierschnittstelle (API) bereit. Eine Klassifizierung der Ablaufsteuerungskomponenten erfolgt auf Grundlage von Klassifizierungsrichtlinien, die in einer dem Orchestrierungssystem 200 zugeordneten Datenbasis 202 kryptographisch gesichert hinterlegt sind.

Mögliche Aspekte für eine Klassifizierung können beispielweise
- Signaturen von Deployment-Informationen oder Images,
- eine Bereitstellung von definierten Verzeichnissen oder Dateien eines Hosts an eine Instanz einer Ablaufsteuerungskomponente im Rahmen eines Mount-Vorgangs bei einem Start der Instanz,
- in Deployment-Informationen oder Images zugewiesene Labels, Prozessprivilegien bzw. Namespaces, insbesondere Namespaces, die mit einem Host oder anderen Containern geteilt werden,
sein. Klassifizierungskriterien können grundsätzlich in beliebiger Form miteinander verknüpft werden.

Anhand einer Klassifizierung der Ablaufsteuerungskomponenten 131-133 wird entsprechend Schritt 4 jeweils ein Berechtigungsprofil für einen Socket-Zugriff referenziert oder dynamisch erstellt. Durch die Berechtigungsprofile sind jeweils auf das Socket 121-123 bezogene zulässige bzw. unzulässige Operationen festgelegt, insbesondere Aufrufe über eine dem jeweiligen Socket 121-123 zugeordnete Anwendungsprogrammierschnittstelle. Für eine Referenzierung von vordefinierten Berechtigungsprofilen ist im vorliegenden Ausführungsbeispiel eine entsprechende, dem Orchestrierungssystem 200 zugeordnete Datenbasis 203 vorgesehen, in der die vordefinierten Berechtigungsprofile kryptographisch gesichert hinterlegt sind. Vorzugsweise werden die Berechtigungsprofile unabhängig von den Klassifizierungsrichtlinien durch einen Betreiber des Orchestrierungssystems 200 gepflegt. Grundsätzlich können die Berechtigungsprofile auch lediglich einzelne, auf ein Socket 121-123 bezogene Operationen als zulässig oder unzulässig festgelegt werden.

Darüber hinaus wird durch die Zuteilungskomponente 201 für jede Ablaufsteuerungskomponente 131-133 jeweils ein individuelles, einem Berechtigungsprofil zugeordnetes Token 240 für den Socket-Zugriff erstellt, ggf. aktualisiert, (Schritt 5) und an die jeweilige Ablaufsteuerungskomponente 131-133 übergeben (Schritt 6). Außerdem wird mit den Tokens 240 bzw. mit den Berechtigungsprofilen jeweils eine anwendungsspezifische Ressourcen-Zugriffsrichtlinie 230 verknüpft, die entsprechend Schritt 7 zur Anwendung an eine Steuerungskomponente des Hosts 100 übermittelt wird, die das jeweilige Socket 121-123 öffnet. Im vorliegenden Ausführungsbeispiel werden die Sockets 121-123 jeweils durch die Ablaufsteuerungsumgebung 112 geöffnet. Dementsprechend werden die anwendungsspezifischen Ressourcen-Zugriffsrichtlinien 230 jeweils zur Anwendung an die auf dem Host 100 installierte Ablaufsteuerungsumgebung 112 übermittelt.

Bei einer Erzeugung oder Aktualisierung von Tokens 240 werden jeweils anhand des jeweiligen Tokens 240, anhand der Klassifizierungsrichtlinie und anhand in der Klassifizierungsrichtlinie referenzierter Berechtigungsprofile bzw. Berechtigungen für den Socket-Zugriff Regeln erzeugt oder angepasst, die in der jeweiligen anwendungsspezifischen Ressourcen-Zugriffsrichtlinie 230 hinterlegt werden. Sobald eine Instanz einer Ablaufsteuerungskomponente 131-133 mit einem zugewiesenen Token 240 gestoppt wird, informiert die Orchestrierungskomponente 200 die Zuteilungskomponente 201 hierüber. Die Zuteilungskomponente 201 stößt dann eine Aktualisierung der jeweiligen anwendungsspezifischen Ressourcen-Zugriffsrichtlinie 230 an und entfernt Regeln für nicht mehr benötigte Tokens aus der anwendungsspezifischen Ressourcen-Zugriffsrichtlinie 230. Eine solche Aktualisierung kann auch dann angestoßen werden, wenn Tokens 240 nur für eine begrenzte Zeitdauer gültig sind.

Für einen Socket-Zugriff wird entsprechend Schritt 8 des in Figur 2 dargestellten Verfahrensablaufs überprüft, ob seitens der jeweiligen Ablaufsteuerungskomponente 131-133 ein Token 240 vorliegt und ob zu diesem Token eine jeweilige anwendungsspezifische Ressourcen-Zugriffsrichtlinie 230 korrespondiert. Falls dies zutrifft, erfolgt der Socket-Zugriff entsprechend Schritt 9 anhand des jeweiligen Tokens 240 und entsprechend der jeweiligen Ressourcen-Zugriffsrichtlinie 230. Dabei werden die Ressourcen-Zugriffsrichtlinien jeweils durch die Ablaufsteuerungsumgebung 112 als Policy Enforcement Point (PEP) durchgesetzt. Alternativ hierzu können die Ressourcen-Zugriffsrichtlinien 230 durch eine Anwendung, die das jeweilige Socket 121-123 bereitstellt, oder durch eine der Ablaufsteuerungsumgebung 112 oder der Anwendung zugeordnete Funktionskomponente durchgesetzt werden.

Im vorliegenden Ausführungsbeispiel werden sowohl die Klassifizierungsrichtlinien und Berechtigungsprofile als auch Ressourcen-Zugriffsrichtlinien 230 und Tokens 240 kryptographisch gesichert durch das Orchestrierungssystem bzw. die Zuteilungskomponente 201 verwaltet. Durch die Klassifizierungsrichtlinie können insbesondere zu schützende Sockets 121-123, auf Sockets 121-123 zu erteilende Berechtigungen, Speicherorte der Ressourcen-Zugriffsrichtlinien 230, entsprechend den Konfigurationsinformationen 212, 222, 232 vorgesehene Eigenschaften der jeweiligen Ablaufsteuerungskomponente und Übergabeverfahren für die Tokens 240 festgelegt werden. Mögliche Übergabeverfahren für die Tokens 240 können beispielsweise eine Verwendung eines Secret-Volume oder einer zur Verfügung gestellten Umgebungsvariable vorsehen.

Zur Vermeidung von Konflikten zwischen Klassifizierungsrichtlinien bzw. Ressourcen-Zugriffsrichtlinien kann beispielsweise ein First-Hit- oder Best-Match-Verfahren zur Erstellung oder Verknüpfung einer anwendungsspezifischen Ressourcen-Zugriffsrichtlinie angewendet werden. Dabei kann entsprechend einer Regel in einer Klassifizierungsrichtlinie ein Token an eine Ablaufsteuerungskomponente zugewiesen werden, wenn für diese Regel im Vergleich zu anderen Regeln in der Klassifizierungsrichtlinie ein Maximum an Bedingungen erfüllt ist, die in der jeweiligen Regel spezifiziert sind.

Vorteilhafterweise erweitern die Ressourcen-Zugriffsrichtlinien jeweils eine Standard-Richtlinie zur Öffnung des jeweiligen Socket 121-123. In der Standard-Richtline kann beispielsweise definiert werden, dass ausgewählte Instanzen der Ablaufsteuerungskomponenten 131-133 grundsätzlich Zugriff auf ein Token 240 haben und dass nicht-containerisierte Anwendungen grundsätzlich keinen Zugriff auf ein Token 240 haben oder lediglich mit einem Standard-Token auf ein Socket 121-123 zugreifen dürfen. Sind noch keine Tokens 240 zugewiesen, umfassen die Ressourcen-Zugriffsrichtlinien 230 jeweils ausschließlich die Standard-Richtline.

## Patentansprüche

1. Verfahren zur Bereitstellung von Steuerungsanwendungen für industrielle Automatisierungsgeräte, bei dem
- die Steuerungsanwendungen jeweils mittels Ablaufsteuerungskomponenten (131-133) bereitgestellt werden, die in eine mittels eines Hosts (100) gebildete Ablaufsteuerungsumgebung (112) ladbar und dort ausführbar sind, wobei für die Ablaufsteuerungskomponenten jeweils Konfigurationsinformationen (212, 222, 232) vorgegeben sind, die zumindest eine Referenzierung eines Speicherabbilds (211, 221, 231) für die jeweilige Ablaufsteuerungskomponente und anwendungsspezifische Vorgaben zur Nutzung von Ressourcen des Hosts umfassen,
- die Ablaufsteuerungskomponenten jeweils bei einem Start ihrer Ausführung anhand der Konfigurationsinformationen und/oder des referenzierten Speicherabbilds hinsichtlich eines Zugriffs auf zumindest einen Socket (121-123) der Ablaufsteuerungsumgebung klassifiziert werden,
- anhand einer Klassifizierung der Ablaufsteuerungskomponenten jeweils ein Berechtigungsprofil für einen Socket-Zugriff erstellt oder referenziert wird, wobei durch die Berechtigungsprofile jeweils auf das Socket bezogene zulässige und/oder unzulässige Operationen festgelegt sind,
- für jede Ablaufsteuerungskomponente jeweils ein individuelles, einem Berechtigungsprofil zugeordnetes Token (240) für den Socket-Zugriff erstellt und an die jeweilige Ablaufsteuerungskomponente übergeben wird,
- mit den Tokens und/oder mit den Berechtigungsprofilen jeweils eine anwendungsspezifische Ressourcen-Zugriffsrichtlinie (230) verknüpft wird, die zur Anwendung an eine Steuerungskomponente übermittelt wird, die das jeweilige Socket öffnet.

2. Verfahren nach Anspruch 1,
bei dem der Socket-Zugriff jeweils anhand des jeweiligen Tokens (240) und entsprechend der jeweiligen Ressourcen-Zugriffsrichtlinie (230) erfolgt.

3. Verfahren nach einem der Ansprüche 1 oder 2,
bei dem die Ressourcen-Zugriffsrichtlinien jeweils eine Standard-Richtlinie zur Öffnung des jeweiligen Socket erweitern.

4. Verfahren nach einem der Ansprüche 1 bis 3,
bei dem die Klassifizierung der Ablaufsteuerungskomponenten auf Grundlage einer Klassifizierungsrichtlinie erfolgt und bei dem bei einer Erzeugung oder Aktualisierung von Tokens jeweils anhand des jeweiligen Tokens, anhand der Klassifizierungsrichtlinie und anhand in der Klassifizierungsrichtlinie referenzierter Berechtigungsprofile und/oder Berechtigungen für den Socket-Zugriff Regeln erzeugt oder angepasst werden, die in der jeweiligen Ressourcen-Zugriffsrichtlinie hinterlegt werden.

5. Verfahren nach Anspruch 4,
bei dem durch die Klassifizierungsrichtlinie zu schützende Sockets, auf Sockets zu erteilende Berechtigungen, Speicherorte der Ressourcen-Zugriffsrichtlinien, entsprechend den Konfigurationsinformationen vorgesehene Eigenschaften der jeweiligen Ablaufsteuerungskomponente und/oder Übergabeverfahren für die Tokens festgelegt sind.

6. Verfahren nach einem der Ansprüche 1 bis 5,
bei dem die Sockets jeweils durch die Ablaufsteuerungsumgebung geöffnet werden und bei dem die anwendungsspezifischen Ressourcen-Zugriffsrichtlinien jeweils zur Anwendung an die Ablaufsteuerungsumgebung übermittelt werden.

7. Verfahren nach Anspruch 6,
bei dem die Ressourcen-Zugriffsrichtlinien jeweils durch die Ablaufsteuerungsumgebung, durch eine Anwendung, die das jeweilige Socket bereitstellt, oder durch eine der Ablaufsteuerungsumgebung oder der Anwendung zugeordnete Funktionskomponente durchgesetzt werden.

8. Verfahren nach einem der Ansprüche 1 bis 7,
bei dem die Konfigurationsinformationen jeweils für ein Laden und/oder eine Ausführung der jeweiligen Ablaufsteuerungskomponente verwendet werden.

9. Verfahren nach einem der Ansprüche 1 bis 8,
bei dem die Ablaufsteuerungskomponenten (131-133) Software-Container sind, bei dem die Ablaufsteuerungsumgebung (112) eine Container-Laufzeitumgebung ist und bei dem die Sockets (121-123) Datei- oder Netzwerk-Sockets sind und/oder jeweils eine Anwendungsprogrammierschnittstelle bereitstellen.

10. Verfahren nach Anspruch 9,
bei dem ein Orchestrierungssystem (200) ein Anlegen, ein Löschen und/oder eine Änderung der Ablaufsteuerungskomponenten (131-133) erfasst und die Steuerungsanwendungen mit ihrem jeweiligen Ausführungsstatus registriert, bei dem das Anlegen, das Löschen und/oder die Änderung der Ablaufsteuerungskomponenten jeweils ein Allokieren oder Freigeben von Ressourcen des Hosts (100) umfasst und bei dem die Tokens (240) durch eine Zuteilungskomponente (201) erzeugt oder aktualisiert werden, die dem Orchestrierungssystem zugeordnet ist.

11. Verfahren nach Anspruch 10,
bei dem Klassifizierungsrichtlinien, Berechtigungsprofile, Tokens und/oder Ressourcen-Zugriffsrichtlinien kryptographisch gesichert durch das Orchestrierungssystem und/oder die Zuteilungskomponente verwaltet werden.

12. Verfahren nach einem der Ansprüche 1 bis 11,
bei dem zur Vermeidung von Konflikten zwischen Klassifizierungsrichtlinien und/oder Ressourcen-Zugriffsrichtlinien ein First-Hit- oder Best-Match-Verfahren zur Erstellung oder Verknüpfung einer anwendungsspezifischen Ressourcen-Zugriffsrichtlinie angewendet wird.

13. System zur Bereitstellung von Steuerungsanwendungen für industrielle Automatisierungsgeräte mit
- einer mittels eines Hosts (100) gebildeten Ablaufsteuerungsumgebung (112),
- zumindest einer Ablaufsteuerungskomponente (131-133) zur Bereitstellung einer Steuerungsanwendung, wobei die Ablaufsteuerungskomponente in die Ablaufsteuerungsumgebung (112) ladbar und dort ausführbar ist, wobei für die Ablaufsteuerungskomponenten jeweils Konfigurationsinformationen (212, 222, 232) vorgegeben sind, die zumindest eine Referenzierung eines Speicherabbilds (211, 221, 231) für die jeweilige Ablaufsteuerungskomponente und anwendungsspezifische Vorgaben zur Nutzung von Ressourcen des Hosts umfassen,
- wobei das System dafür eingerichtet ist, dass die Ablaufsteuerungskomponenten jeweils bei einem Start ihrer Ausführung anhand der Konfigurationsinformationen und/oder des referenzierten Speicherabbilds hinsichtlich eines Zugriffs auf zumindest einen Socket (121-123) der Ablaufsteuerungsumgebung klassifiziert werden,
- wobei das System ferner dafür eingerichtet ist, dass anhand einer Klassifizierung der Ablaufsteuerungskomponenten jeweils ein Berechtigungsprofil für einen Socket-Zugriff erstellt oder referenziert wird, wobei durch die Berechtigungsprofile jeweils auf das Socket bezogene zulässige und/oder unzulässige Operationen festgelegt sind,
- wobei das System ferner dafür eingerichtet ist, dass für jede Ablaufsteuerungskomponente jeweils ein individuelles, einem Berechtigungsprofil zugeordnetes Token (240) für den Socket-Zugriff erstellt und an die jeweilige Ablaufsteuerungskomponente übergeben wird,
- wobei das System ferner dafür eingerichtet ist, dass mit den Tokens und/oder mit den Berechtigungsprofilen jeweils eine anwendungsspezifische Ressourcen-Zugriffsrichtlinie (230) verknüpft wird, die zur Anwendung an eine Steuerungskomponente übermittelt wird, die das jeweilige Socket öffnet.
